# EUROPEAN PATENT APPLICATION

(11) **EP 2 749 171 A1**
(43) Date of publication of application: **02.07.2014**
(21) Application number: 12008628.5
(22) Date of filing: 27.12.2012
(51) Int. Cl.: A23C 11/02, A23L 2/38, A23L 1/10, A23L 1/105, A23L 1/19, A23G 1/56

(54) **Method for preparing a liquid food product from cereals containing cocoa and hazelnut and liquid food product thus obtained**

(71) Applicant: Liquats Vegetals SA, Girona (ES)
(72) Inventor: Erra Serrabasa, Josep M., 17430 Santa Coloma de Farners (Girona) (ES); Gol, Oriol, 17406 Viladrau (Girona) (ES); Erra Martín, Laura, 17003 Girona (Girona) (ES)
(74) Representative: Juncosa Miro, Jaime

(57) **Abstract**

The method for obtaining a cereal-based drinkable liquid food product, characterized in that it comprises the steps of: a) preparing a first mixture with the following ingredients: cereals, enzymes, and water, wherein said cereals are already ground or are ground while preparing the mixture, b) heating the ground mixture, c) reducing the starch of said cereals to shorter chain sugars, d) preparing a second mixture by addition of hazelnut to the product resulting from step c); e) homogenizing said second mixture; f) separating a liquid part from the second mixture; g) adding cocoa and/or a cocoa containing product, to prepare a third mixture and obtain a liquid food product.

## Description

The present invention relates to a method for obtaining a cocoa-containing liquid food product that is derived from cereals and to a liquid food product obtained by means of the mentioned method.

The invention provides a drinkable liquid food product incorporating as components cereals, cocoa and hazelnuts.

Several food products containing cocoa, some of them being drinkable liquids and others being in a solid form, are known in the state of the art, the drinkable products having in common the fact that they form a beverage known as "cocoa milk or chocolate or cocoa beverages". The benefit of cocoa antioxidants or cocoa polyphenol compounds are known and additional food products containing cocoa are being investigated. There is the need to provide an alternative to the state of the art processes and products by means of a novel method that is simple and economical to carry out and that results in a stable and palatable product with excellent nutritional properties.

This problem is solved by the present invention that provides a process of producing a cereals beverage that enables to obtain a food product in the form of a drinkable liquid containing cereals, hazelnut and cocoa. The invention provides a novel cocoa beverage that combines the properties of cereals beverages with the properties of hazelnuts and of cocoa polyphenol-containing products, concentrates or extracts to produce a novel beverage.

Cereals beverages which incorporate hazelnuts and cocoa are not known in the art.

In a first aspect, the present invention relates to a method for obtaining a cereals-based drinkable liquid food product, in particular a beverage, from the following ingredients: deshelled cereals, water, cocoa and deshelled hazelnuts.

The method comprises the steps of:
a) preparing a first mixture with the following ingredients:
   - cereals,
   - enzymes, and
   - water,
   wherein said cereals are already crushed or are crushed while preparing the mixture,
b) heating the ground mixture and
c) modifying the starch of the cereals to reduce it into sugars by means of said enzymes;
   characterized in further comprising the step of
d) adding hazelnut and cocoa to the product resulting from step c), directly or after further steps, to prepare a second mixture.

Hazelnuts are present in a finely ground condition and are most preferably obtained from whole hazelnuts; the hazelnuts can be ground with the already ground cereals kernels, i.e. with the product obtained at step c) or can be previously ground and then added to the ground cereals. In the latter case, preferably the hazelnuts are previously ground to provide a hazelnut paste that is added to the mixture after step f), discussed below.

According to an aspect of the invention, marine algae, i.e. seaweed, are added to the beverage composition, preferably as dry seaweed, both as a stabilizer and a source of nutritional elements. Optionally, the beverage can further include vitamins, calcium or other minerals, energizing or stimulating ingredients, or mixtures thereof. The beverage further includes emulsifiers and stabilizers, in a known way.

Independently on the way hazelnuts are added to the mixture, the process requires the steps of:
e) homogenizing said mixture at least after step c),
f) separating a liquid part from the mixture
g) preparing of a third mixture by addition of cocoa or cocoa containing product, to said liquid part obtained at step f).

In step a) the first mixture contains cereals, water and enzymes for transforming the cereals's starch into shorter chain sugars, according to a process that is known per se in the art. Preferred cereals are oats and rice, but any type of cereal may be used, provided it can undergo the method steps. Suitable enzymes are also known in the art and are e.g. amylases, alfa-amylases, glucosidases, amyloglucosidases and similar.

In this step the cereals may be already crushed or may be crushed in the presence of water while preparing said first mixture, usually in the form of a fluid paste. The mixture is heated, during the grinding step, at a temperature in the range of 50 to 70°C to enhance the action of enzymes on the starch of the cereals. The mixture is then ground and heated up to 80-90°C until the starch, preferably at least 80% of it , has been transformed into sugars, such as maltose, fructose, glucose, saccharose, raffinose, maltotriose.

The obtained mixture is in the form of a fluid paste that is homogenized and subjected to a separation step where a liquid part is separated from the paste obtained at step c), to be used in the final beverage.

According to the invention, hazelnuts are added to the mixture after at least part of the starch has been reduced to sugars; they may be added as deshelled nuts to be crushed and ground, or as already ground nuts, usually in the form of a paste. If the hazelnuts are to be ground, they are added to the mixture at step c) and they are ground together with the cereals' fluid paste. In another exemplary embodiment of the invention, the hazelnuts are added to the mixture after the separation step f), as a finely ground or, preferably, in paste form.

In both cases the addition results in providing a final drinkable liquid containing cereals-derived products, hazelnut-derived products and cocoa; the wording cereals-derived and hazelnut-derived are used to define the products that are obtained by treating cereals and hazelnuts as above discussed, in particular, the beverage will contain cereals fibers, fats and proteins, hazelnut fibers, fats and proteins, cocoa and/or cocoa containing products. Hazelnut paste is considered a hazelnut-derived product.

Preferably, an emulsifier, e.g. a lecithin, is added to the mixture at least before homogenization.

The amounts of starting materials are as follows (percent by weight on the total composition).
- Cereals (de-hulled): 10% - 20%,
- Water 80-90% (and enough to reach 100%)
- Hazelnuts: 1%-5%, preferably 2.5%-4%,
- Cocoa: 0.5%-2.5%, preferably 1.0%-2%

If present, dry marine algae (seaweed) are preferably provided in an amount of 0.01-0.15%.

Different ingredients such as calcium salts or other minerals, sugars, sweeteners, vitamins, soluble cereals, coffee, emulsifiers and stabilizers which can comprise from 0 to 5% of the total weight of the composition, can be added to this liquid part.

The water, and crushed cereals are heated to a temperature that is preferably within the range of 50 to 70 °C, so that said mixture produces a fluid paste containing fats, vitamins and both soluble and insoluble proteins, and in which the starch has been at least in part transformed into sugars. The mentioned heat supply to the described process for preparing the mixture is carried out in a preferred embodiment by using hot water at a temperature of 50-70°C.

Cereals and hazelnuts may be wet ground together in water but the preferred embodiment provides for the cereals being first ground and treated with enzymes at the above mentioned temperature to provide a paste. If marine algae, i.e. seaweeds, are present, they are preferably treated together with cereals and subjected together to the same process steps.

In the preferred embodiment, the heating is carried out for a time within the range of 2 to 5 minutes. The obtained mixture is then homogenized and from the resulting homogenized fluid paste a first part, a thick paste containing the insoluble proteins, is separated in a way known in the art, leaving a second liquid part providing said food product in a liquid form.

Homogenization is carried out before separation, preferably at a pressure within 180 to 400 bar, most preferably the range of 185 to 215 bars. The separation is preferably carried out by centrifugation, in a decanter: the solids are retained in the decanter and the liquid exits the decanter upon centrifugation. Hazelnuts are either raw or toasted (thermally treated), or a combination of both.

The dry marine alga is obtained from a whole seaweed, preferably being one or more of a red alga of the genus Chondrus, species Chrondus Crispus, a red alga of the genus Gigartina, e.g Gigartina mammillosa and Gigartina acicularis, or a red alga of the genus Eucheuma, depending on the embodiment.

No soaking of the cereal kernels is required or carried out if they are ground and crushed directly in the hot water, by wet grinding. As mentioned, the hazelnuts may be ground and crushed in the same device where the cereals have been ground, alternatively, a separate grinding step can be carried out.

In an exemplary embodiment, the hazelnuts are ground and thermally treated at 60-90°C, in the liquid part that is separated from the fluid paste by centrifugation; during the thermal and mechanical treatment, the hazelnuts will release into the water a mixture the following products: proteins, fibers, calcium, vitamins, aminoacids, fats, in particular unsaturated fatty acids, phytosterols, copper and other minerals, in particular Ca, P, Mg and K.

In another exemplary embodiment of the method of the invention, the hazelnuts are ground separately and the ground hazelnut, generally in the form of a paste, is added to the liquid product obtained after homogenization and centrifugation at step f) together with cocoa, to prepare the required mixture.

A homogenization step is carried out on the ground and enzymatically treated cereals before the centrifugation and separation steps; this step is preferably carried out at 60-90°C and at a pressure in the range of 180-400 bar.

According to an embodiment of the present invention, at least one homogenization step is carried out on a mixture comprising:
- ground cereals de-hulled, 10 to 20% by weight with respect to the total mixture,
- ground hazelnuts between 1 and 5% by weight with respect to the total mixture.

Cocoa and/or cocoa-containing products (e.g. chocolate) in the amount of 0.5 to 2.0% by weight of the total mixture and additional ingredients such as calcium salts or other minerals, sugars, sweeteners, vitamins, soluble cereals, coffee, emulsifiers and stabilizers in an amount from 0 to 5% of the total weight of the composition, are added to the homogenized and separated liquid part under mixing; the resulting mixture may be further homogenized.

Water may be added enough to top up the remaining components to 100% by weight and to reach the required fluidity and content of dry matter.

Preferably, the amount of said additional ingredients is 0.1 -0,8% by weight of the dry matter content of the final product.

In a second aspect, the invention provides a cocoa liquid food product, as obtainable with the above mentioned process, containing a cereals beverage, hazelnut derivated products and cocoa.

In an exemplary embodiment, the liquid food product comprises:
- 1 % to 5% by weight of hazelnut derivatives,
- 0.5 to 2.0% by weight of cocoa and/or cocoa containing products
- optionally 0.01 to 0.12% by weight of soluble products from dry marine algae, and
- water up to 100% by weight.

More specifically, the liquid product is a water composition comprising cereals protein and fats and hazelnuts proteins and fats, in which the cereals and the hazelnut fats are dispersed in the form of an emulsion.

The drinkable food product object of the present invention can be further added with at least one additional ingredient of the group consisting of the following ingredients: calcium salts or other minerals and vitamins in a ratio of up to 0.5% of the total weight of dry matter; and soluble cereals, sugars, sweeteners, coffee, or a combination thereof comprising 0.1-15% of the total weight of dry matter.

Other features and advantages of the invention will be observed in the description of examples which are detailed below by way of a non-limiting explanation with reference to the enclosed non-limiting figures where:
Fig. 1 is a flow chart showing preparation of a cocoa, hazelnut and cereals beverage from whole grains and nuts;
Fig. 2 is a flow chart showing preparation of a cocoa, hazelnut and cereals beverage from hazelnut paste.

### Example 1. Preparation of a cocoa, hazelnut and cereals beverage from whole cereals grains and hazelnut nuts.

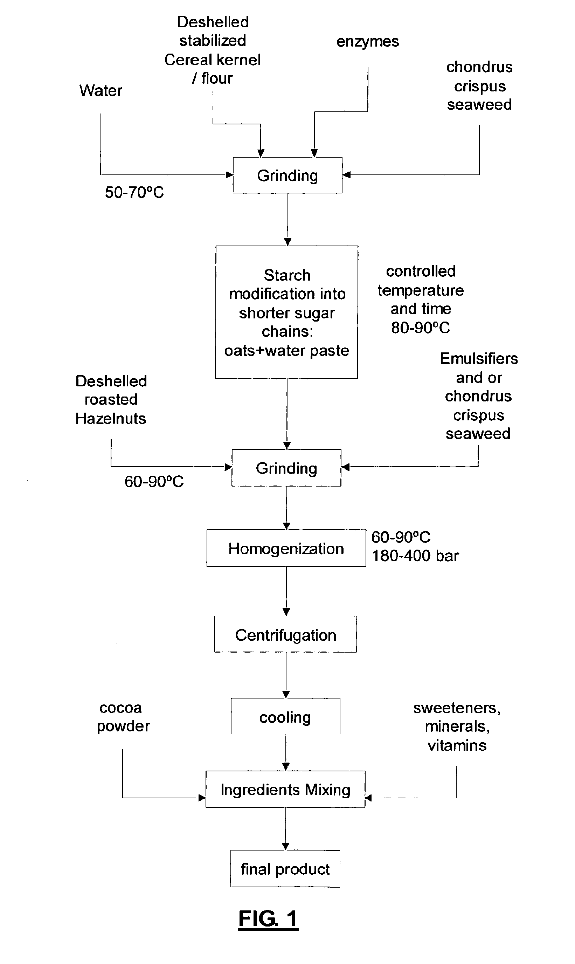

*The flow chart of this preparation is shown in* *Fig.1**. In the preparation, whole oats kernels are de-hulled and wet ground in water at a temperature of 50-70°C. Seaweed, namely chondrus crispus, is added to the cereals and ground with them. The resulting hot fluid paste is treated at controlled temperature to perform the reduction of the starch to shorter chain sugars for 6-9 hours.*

*At this point, de-hulled hazelnuts are added to the paste and are wet ground in the paste at a temperature in the range of 60-90°C to release fats and proteins from the hazelnut into the mixture, where are already present fats and proteins from the cereals.*

*The ground mixture, i.e. the second mixture, is homogenized at a temperature of at least 60°C and at a pressure of 180-400 bar. Following this step the paste is centrifugated, the liquid portion containing emulsified fats and soluble protein is separated, cooled and fed to a mixer.*

*To the liquid portion in the mixer are added cocoa powder emulsifiers, e.g. lecithin, and (optionally) sweeteners, minerals, vitamins and similar additional ingredients. If necessary water is added to reach the required amount in the final product. This mixture is then subjected to another homogenization step at 180-400 bar and is subsequently filtered and treated for final packaging, usually including UHT treatment.*

*The final product has an excellent taste and there is no or very limited sedimentation of the components of the hazelnut paste in the final package.*

*In an exemplary embodiment the following amounts are used:*
*100 to 120 kg of cereals with 847,5 to 867,8 liters of water in the first step*
*0, 2 to 0, 5 kg of seaweed*
*20 kg of hazelnut nuts*
*12 kg of cocoa powder*

### Example 2. Preparation of a cocoa, hazelnut and cereals beverage from cereals and hazelnut nuts paste.

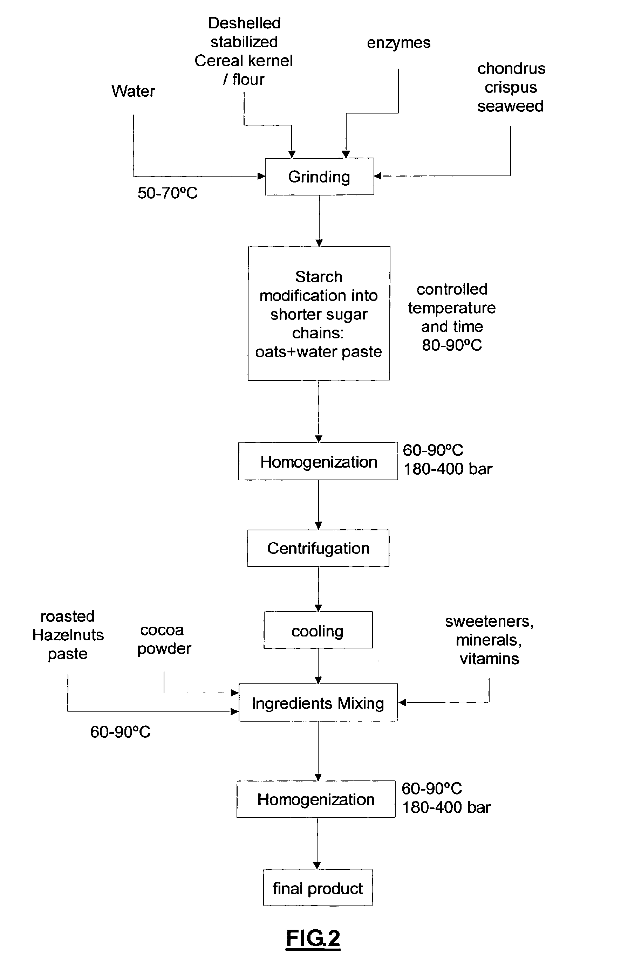

*The flow chart of this preparation is shown in* *Fig.2**. In the preparation, whole cereals (oats) are de-hulled and wet ground in water at a temperature of 50-70°C. Seaweed, namely chondrus crispus, is added to the cereals and ground with them. The resulting hot fluid paste is treated at the cited temperature to perform the reduction of the starch to shorter chain sugars for 6-9 hours.*

*The paste is then homogenized a temperature of at least 60°C, preferably in the range of 60-90°C and at a pressure of 180-400 bar. Following this step the paste is centrifugated, so that the liquid portion containing emulsified fats and soluble protein is separated; the separated portion is cooled and fed to a mixer.*

*To the liquid portion in the mixer are added hazelnut paste, cocoa powder, emulsifiers, e.g. lecithin, and (optionally) sweeteners, minerals, vitamins and similar additional ingredients. If necessary water is added to reach the required fluidity of the product. This mixture is then subjected to another homogenization step at 180-400 bar and is subsequently treated for final packaging, usually including filtering and UHT treatment. The final product has an excellent taste and there is no or very limited sedimentation of the components of the hazelnut paste in the final product.*

*In an exemplary embodiment the following amounts are used:*
*120 to 140 kg of dehulled cereals beans*
*822, 5 to 852, 8 liters of water*
*15 to 25 kg of deshelled hazelnut paste*
*0, 2 to 0, 5 kg of seaweed*
*12 kg of cocoa powder*

In the above examples cereal kernels are mentioned, but the method could be carried out also on cereal flour, with the same steps; preferably, the flour is made of the whole grains, or kernels, so as to maintain the fats (fats is used as a word including oils) minerals, vitamins and proteins therein present.

As above seen, according to the invention the amount of hazelnut paste to cereals is in the range of 1:8 to 1:5,6 and the ratio of hazelnut nuts to cereals is in the range of 1:5 to 1:6.

A person skilled in the art may introduce changes and modifications in the described embodiments without departing from the scope of the invention as it is defined in the attached claims.

## Claims

1. A method for obtaining a cereal-based drinkable liquid food product, **characterized in that** it comprises the steps of:
a) preparing a first mixture with the following ingredients:
- cereals,
- enzymes, and
- water,
wherein said cereals are already ground or are ground while preparing the mixture,
b) heating the ground mixture;
c) reducing the starch of said cereals to shorter chain sugars;
**characterizing in** further comprising the steps of:
d) preparing a second mixture by addition of hazelnut to the product resulting from step c);
e) homogenizing said second mixture;
f) separating a liquid part from the second mixture;
g) adding cocoa and/or a cocoa containing product, to prepare a third mixture and obtain a liquid food product.

2. A method according to claim 1, **characterized in that** said steps b) is carried out at a temperature of 50-70°C, and said step c) is carried out at a temperature of 80-90°C.

3. A method according to claim 1 or 2, wherein said hazelnuts are added as nuts at the end of step c) and are ground in the product obtained from step c) and wherein the resulting first mixture of ground hazelnuts and treated cereals undergoes step e) and a f).

4. A method according to claim 1 or 2, wherein the product of step c) is homogenized and a liquid part is separated from it and said hazelnuts are added as a paste to the resulting separated liquid part.

5. A method according to any previous claim, wherein dry marine algae are added to said first or second mixture.

6. A method according to any previous claim, wherein an emulsifier is added on said second preparation mixture.

7. A method according to any previous claim wherein said third mixture comprises:
- ground cereal dehulled, selected among oats or rice in a range of 10 to 20% by weight with respect to the total mixture;
- ground hazelnuts in a range of 1 and 5% by weight with respect to the total mixture;
- cocoa or cocoa-containing products in a range of 0.5 to 2.0% by weight of the total mixture;
- optionally marine algae in a range of 0.01 and 0.15% of the total weight of the composition, and
- water enough to reach 100% by weight.

8. A method according to claim 7, further comprising the step h) of adding to the solution at least one additional ingredient from the group consisting of calcium or other minerals salts, sugars, sweeteners, vitamins, soluble cereals, coffee, emulsifiers and stabilizers, or a combination thereof, in a range of 0 to 5.% of the total weight of the final composition.

9. The method according to claim 8, wherein said ingredients are 0.1 -0.8% by weight of the total weight of the dry matter in the final beverage composition.

10. A method according to any previous claim, wherein said cocoa product is in powder.

11. An intermediate for producing a liquid food product as obtainable through a process according to any claim 1 to 10, **characterized in that** it comprises:
- ground cereal de-shelled, i.e. dehulled, in a range of 10 to 20% by weight with respect to the total mixture ,
- ground hazelnuts in a range of 1 and 5% by weight with respect to the total mixture,
- enzymes, selected among alfa-amylases, glucosidases, amyloglucosidases
- optionally marine algae in a range of 0.01 and 0.15% of the total weight of the composition, and
- water enough to reach 100% by weight.

12. A liquid food product as obtainable through a process according to any claim 1 to 10, **characterized in that** it comprises a cereal liquid base and, by weight on the beverage:
- 1.0 to 5.0% of hazelnut paste derivatives;
- 0.5 to 2.0% of cocoa and/or cocoa derivatives.

13. A liquid food product according to claim 12, further comprising products deriving from marine algae, including one or more of the following: soluble fibers including carragenins and natural occurring stabilizer, calcium, vitamins, proteins, fatty acids, sterols, high quality proteins, magnesium, iodine, iron, phosphorus, sodium.

14. The liquid food product according to any claim 12 to 13, further comprising at least one additional ingredient from the group consisting of the following ingredients: calcium salts or other minerals and vitamins in a ratio of up to 0.5% of the total weight of dry matter of the final beverage composition.

15. The liquid food product according to any claim 10 to 14, wherein the granulometry of the solid particles therein contained is within the range of 2 to 10 µm.
